# EUROPEAN PATENT APPLICATION

(11) **EP 4 810 586 A1**
(43) Date of publication of application: **23.09.2026**
(21) Application number: 25899433.4
(22) Date of filing: 02.12.2025
(51) Int. Cl.: C09K 19/52, C09K 19/54, C09K 19/02, B01J 13/06, G02F 1/1334, G02F 1/1337

(54) **LIQUID CRYSTAL CAPSULE, AND CAPSULE LIQUID, OPTICAL FILM, OPTICAL DEVICE, AND VARIABLE TRANSMITTANCE DEVICE USING SAME**

(30) Priority: 10.02.2025 KR 20250016668; 28.11.2025 KR 20250186071
(71) Applicant: LG Chem, Ltd., Seoul 07336 (KR)
(72) Inventor: KIM, Yunseop, Yuseong-gu, Daejeon 34122 (KR); KIM, Jinhong, Yuseong-gu, Daejeon 34122 (KR); KIM, Yeji, Yuseong-gu, Daejeon 34122 (KR); KIM, Jee Seon, Yuseong-gu, Daejeon 34122 (KR)
(74) Representative: Hoffmann Eitle
(86) International application number: PCT/KR2025/020359
(87) International publication number: WO 2026/168699

(57) **Abstract**

The present invention relates to a liquid crystal capsule comprising: a core containing liquid crystal and an emulsifier; and a polymer shell formed on a surface of the core; wherein the emulsifier comprises a sorbitan ester-based compound, the sorbitan ester-based compound has a molar mass of 1220 g/mol or less, and the sorbitan ester-based compound comprises an intramolecular carbon-carbon double bond.

In addition, the present invention relates to a liquid crystal capsule comprising: a core containing liquid crystal and an emulsifier; and a polymer shell formed on a surface of the core; wherein the emulsifier comprises a sorbitan ester-based compound, and the emulsifier further comprises at least one second emulsifier selected from the group consisting of an acetylenic diol-based compound and a polysorbate-based compound.

## Description

### [Technical Field]

### Cross-reference to Related Application(s)

This application claims the benefit of priority based on Korean Patent Application No. 10-2025-0016668 filed on February 10, 2025, and Korean Patent Application No. 10-2025-0186071 filed on November 28, 2025, the entire contents of which are incorporated herein by reference.

The present invention relates to a liquid crystal capsule that may induce a high transmittance variation rate even at a lower voltage, and a capsule solution, an optical film, an optical device, and a transmittance variable device using the same.

### [Background Art]

A polymer dispersed liquid crystal (Polymer Dispersed Liquid Crystals, PDLC) film is a composite material that is dispersed liquid crystal molecular grains of several micrometers in a polymer and is disposed between conductive films, and the film may be applied to high-brightness projection-type displays or high-contrast reflective display devices. The driving principle of PDLC is that light incident on a polymer layer in which liquid crystal is dispersed is scattered by the difference in refractive index between the liquid crystal and the polymer to be in an opaque state, but by applying an electric field thereto, the orientation of the liquid crystal is aligned, thereby changing the refractive index and controlling light scattering and transmittance to become a transparent state.

As such, a PDLC device does not require a separate polarizer and thus does not structurally require a polarizing plate, and does not require an alignment process in terms of processing, so it may be manufactured by a simple method, and it may be applied to smart glass for buildings and automobiles corresponding to switchable windows and smart screens, and may also be applied as a black PDLC film for transparent OLEDs. In addition, it may be manufactured in a flexible form depending on the material used as a substrate.

Specifically, a liquid crystal-based smart window refers to an active window capable of controlling transmittance with glass containing a separate liquid crystal layer, and is a technology applicable not only to buildings but also to the mobility field. Through the existing polymer dispersed liquid crystal (PDLC) technology, it was possible to prepare liquid crystal domains having a size of several micrometers by mixing liquid crystals with monomers capable of photo- or thermal polymerization and through phase separation between a polymer and a liquid crystal occurring during polymerization.

In a PDLC film, liquid crystals within domains of several micrometers have a refractive index matching/mismatching with a polymer matrix according to application of voltage on/off, whereby the PDLC film may implement light-blocking/transmission modes.

In particular, in the case of manufacturing a tinted PDLC containing a dye, there are problems such as an anisotropic dye not being consistently aligned according to an electric field in a polymer, and particularly, a contamination problem of a polymer matrix by the dye occurs, and therefore, various studies are being conducted on a liquid crystal composite in a capsule structure in which the liquid crystal and the anisotropic dye are encapsulated in a polymer shell, the composite exhibiting excellent mechanical physical properties, possessing high uniformity, and being capable of preventing contamination of the polymer matrix by the dye.

However, as the liquid crystal and the anisotropic dye are encapsulated in the polymer shell, there was a limitation in that the alignment of the liquid crystal changes only when a higher voltage is applied, due to the high interaction arising from an increased contact area between the liquid crystal enclosed in the capsule and a substance contained in the capsule shell.

### [Detailed Description of the Invention]

### [Technical Problem]

The present invention is to provide a liquid crystal capsule which may induce a high transmittance variation rate even at a lower voltage.

Furthermore, the present invention is to provide a capsule solution, an optical film, an optical device, and a transmittance variable device manufactured using the liquid crystal capsule.

### [Technical Solution]

In order to solve the above problem, in this specification, there is provided a liquid crystal capsule comprising: a core containing liquid crystal and an emulsifier; and a polymer shell formed on a surface of the core; wherein the emulsifier comprises a sorbitan ester-based compound, the sorbitan ester-based compound has a molar mass of 1220 g/mol or less, and the sorbitan ester-based compound comprises an intramolecular carbon-carbon double bond.

The present specification also provides a liquid crystal capsule comprising: a core containing liquid crystal and an emulsifier; and a polymer shell formed on a surface of the core; wherein the emulsifier comprises a sorbitan ester-based compound, and the emulsifier further comprises at least one second emulsifier selected from the group consisting of an acetylenic diol-based compound and a polysorbate-based compound.

The present specification also provides a capsule solution comprising the liquid crystal capsule and a solvent.

The present specification also provides an optical film comprising a binder resin and liquid crystal domains dispersed in the binder resin, wherein a haze upon voltage application is 10% or less, and a threshold voltage, which is a voltage at which the transmittance reaches 10% of the maximum transmittance measured upon voltage application, is 60 V or less.

The present specification also provides an optical device comprising the optical film.

The present specification also provides a transmittance variable device comprising the optical film.

Hereinafter, the liquid crystal capsule according to specific embodiments of the invention, and a capsule solution, an optical film, an optical device, and a transmittance variable device using the same will be described in more detail.

Unless otherwise stated explicitly in the present specification, terminology is merely intended to refer to specific embodiments and is not intended to limit the present invention.

Singular forms used in the present specification include plural forms as well, unless phrases clearly indicate the opposite.

The meaning of "comprise" used in the present specification specifies a particular characteristic, region, integer, step, operation, element and/or component, and does not exclude the presence or addition of another particular characteristic, region, integer, step, operation, element, component, and/or group.

And, terms including ordinal numbers such as "first" and "second" in the present specification are used for the purpose of distinguishing one component from another component, and are not limited by the ordinal numbers. For example, within the scope of the present invention, a first component may also be named a second component, and similarly, a second component may be named a first component.

In the present specification, a derivative compound refers to a compound that is modified when a certain organic compound is taken as a parent compound, to an extent that does not significantly change the structure and properties of the parent compound, such as introduction of a functional group, oxidation, reduction, and substitution of an atom.

Hereinafter, the present invention will be described in more detail.

### 1. Liquid crystal capsule

According to one embodiment of the invention, there may be provided a liquid crystal capsule comprising: a core containing liquid crystal and an emulsifier; and a polymer shell formed on a surface of the core; wherein the emulsifier comprises a sorbitan ester-based compound, the sorbitan ester-based compound has a molar mass of 1220 g/mol or less, and the sorbitan ester-based compound comprises an intramolecular carbon-carbon double bond.

The present inventors confirmed through experiments and completed the invention that, like the liquid crystal capsule of the one embodiment, by using a sorbitan ester-based compound having a molar mass of 1220 g/mol or less and comprising an intramolecular carbon-carbon double bond as an emulsifier contained together with liquid crystal in a core inside the capsule, anchoring energy with a surface in contact with the liquid crystal is reduced, and as liquid crystal alignment changes to radial, vertical alignment of the liquid crystal is induced, such that a high transmittance variation rate may be induced even at a lower voltage.

Specifically, the liquid crystal capsule of the one embodiment may comprise a liquid crystal-containing core. The liquid crystal capsule structure according to the present invention is characterized by containing liquid crystal within an interior encapsulated by a polymer shell. Due to this, the uniformity of liquid crystal particles may be improved.

The liquid crystal is not particularly limited, and examples thereof include nematic liquid crystal, smectic liquid crystal, cholesteric liquid crystal, and chiral nematic liquid crystal. Specific types of liquid crystal compounds are not limited, and various conventionally known liquid crystals may be used without limitation. The liquid crystal compound is not particularly limited, but may be composed of a fluorine-based or cyano-based compound, or a mixture thereof.

Meanwhile, the core may further comprise an emulsifier. The emulsifier is a surfactant used for forming liquid crystal droplets, and by increasing surface energy in contact with liquid crystal, as liquid crystal alignment changes to radial, thereby inducing vertical alignment of the liquid crystal and may induce a high transmittance variation rate even at a lower voltage.

The emulsifier may comprise a sorbitan ester-based compound. The sorbitan ester-based compound may include one or more of the sorbitan ester, a derivative compound thereof, or a mixture of two or more types thereof.

The sorbitan ester-based compound may comprise an intramolecular carbon-carbon double bond. When the intramolecular carbon-carbon double bond (C=C) of the sorbitan ester-based compound is contained, interactions between the double bonds in the emulsifier molecules aligned toward a central axis in the liquid crystal and the liquid crystal molecules are strengthened, so that the liquid crystal may exhibit radial alignment. As a result, high transmittance variation may be implemented even at a lower voltage. The sorbitan ester-based compound is a reaction product of sorbitan and a carboxylic acid containing an intramolecular carbon-carbon double bond, and the carboxylic acid containing an intramolecular carbon-carbon double bond may have 10 to 30 carbon atoms, or 15 to 30 carbon atoms, or 16 to 30 carbon atoms, or 17 to 30 carbon atoms, or 15 to 20 carbon atoms, or 16 to 20 carbon atoms, or 17 to 20 carbon atoms, or 17 to 19 carbon atoms. A specific example of the carboxylic acid containing an intramolecular carbon-carbon double bond may be oleic acid.

The sorbitan ester-based compound may have a molar mass of 1220 g/mol or less, or 800 g/mol or less, or 100 g/mol or more, or 100 g/mol to 1220 g/mol, or 100 g/mol to 800 g/mol, or 400 g/mol to 700 g/mol, or 400 g/mol to 500 g/mol, or 600 g/mol to 700 g/mol.

On the other hand, if the molar mass of the sorbitan ester-based compound excessively increases above 1220 g/mol, when preparing capsules using liquid crystal, problems such as a decrease in oil-in-water emulsion stability and an increase in haze of an optical film may occur.

More specifically, the sorbitan ester-based compound may have a molar mass of 800 g/mol or less, or 100 g/mol to 800 g/mol, or 400 g/mol to 700 g/mol, or 400 g/mol to 500 g/mol. A specific example of the sorbitan ester-based compound having the above-mentioned molar mass may be sorbitan monooleate.

The sorbitan ester-based compound having the molar mass of 800 g/mol or less, or 100 g/mol to 800 g/mol, or 400 g/mol to 700 g/mol, or 400 g/mol to 500 g/mol, has an HLB (Hydrophile Lipophile Balance) value of 4 to 4.5. The HLB may be calculated by the following mathematical formula 1. $HLB = 20 * \left(MH/M\right)$

In Mathematical Formula 1, MH is the molecular weight (or molar mass) of a hydrophilic group, and M is the molecular weight (or molar mass) of an emulsifier.

Further, the sorbitan ester-based compound may have a molar mass of 800 g/mol or less, or 100 g/mol to 800 g/mol, or 400 g/mol to 700 g/mol, or 600 g/mol to 700 g/mol. A specific example of the sorbitan ester-based compound having the above-mentioned molar mass may be sorbitan dioleate.

Meanwhile, the sorbitan ester-based compound may be a mixture of two or more types of sorbitan ester-based compounds having different molar masses. More specifically, the sorbitan ester-based compound may be a mixture of a sorbitan ester-based compound having a molar mass of 400 g/mol to 500 g/mol and a sorbitan ester-based compound having a molar mass of 600 g/mol to 700 g/mol.

A molar ratio for mixing the sorbitan ester-based compound having the molar mass of 400 g/mol to 500 g/mol and the sorbitan ester-based compound having the molar mass of 600 g/mol to 700 g/mol is not particularly limited, and the molar ratio of the sorbitan ester-based compound having the molar mass of 400 g/mol to 500 g/mol to the sorbitan ester-based compound having the molar mass of 600 g/mol to 700 g/mol may be 10:1 to 1:10, or 5:1 to 1:5, or 3:1 to 1:3.

Describing with a more specific example, the mixture of two or more types of sorbitan ester-based compounds having different molar masses may be sorbitan sesquioleate (a 1:1 molar ratio mixture of sorbitan monooleate (molar mass: 428.61 g/mol) and sorbitan dioleate (molar mass: 693 g/mol)).

The aforementioned sorbitan ester-based compound is a mixture of a sorbitan ester-based compound having a molar mass of 400 g/mol to 500 g/mol and a sorbitan ester-based compound having a molar mass of 600 g/mol to 700 g/mol, wherein the mixture has an HLB (Hydrophile Lipophile Balance) value of 3.5 to 3.9.

Meanwhile, based on 100 parts by weight of the liquid crystal, an emulsifier content may be 0.1 parts by weight to 50 parts by weight, or 0.1 parts by weight to 20 parts by weight, or 0.5 parts by weight to 20 parts by weight, or 1 part by weight to 20 parts by weight, or 5 parts by weight to 11 parts by weight. When the content of the emulsifier is excessively reduced based on 100 parts by weight of the liquid crystal, there is a limitation in that it is difficult to sufficiently induce a high transmittance variation rate even at a lower voltage due to vertical alignment of the liquid crystal induced by the emulsifier. Further, when the content of the emulsifier is excessively increased based on 100 parts by weight of the liquid crystal, a problem may occur in that excessive emulsifiers form colloidal micelles, causing surface tension of a solution to drop sharply.

Meanwhile, the core may further comprise an anisotropic dye. The anisotropic dye is not particularly limited as long as it is a dopable anisotropic dye, and specifically, it may be S-428, M-483, M412 (Mitsui Fine Chemicals), etc.

Meanwhile, the core may further comprise a siloxane-based additive. The siloxane-based additive is an additive capable of lowering interfacial tension of the liquid crystal. Accordingly, the liquid crystal capsule in which the siloxane-based additive and the liquid crystal are contained together in the core may sufficiently lower surface anchoring energy of the liquid crystal in the capsule.

The siloxane-based additive may have a molar mass of 500 g/mol or less, or 100 g/mol to 500 g/mol. The siloxane-based additive may comprise a trisiloxane-based compound. The trisiloxane-based compound may comprise a trisiloxane compound or a derivative thereof. As a specific example, the siloxane-based additive may be octamethyltrisiloxane or hexamethylcyclotrisiloxane.

In particular, based on 100 parts by weight of the liquid crystal, a siloxane-based additive content may be 0.1 parts by weight to 50 parts by weight, or 0.1 parts by weight to 20 parts by weight, or 0.5 parts by weight to 20 parts by weight, or 0.5 parts by weight to 10 parts by weight, or 0.9 parts by weight to 1 part by weight. When the content of the siloxane-based additive is excessively reduced based on 100 parts by weight of the liquid crystal, the surface tension lowering effect of the liquid crystal by the siloxane-based additive is not sufficiently implemented, so there is a limitation in that the surface anchoring energy of the liquid crystal in the capsule cannot be sufficiently lowered. Further, when the content of the siloxane-based additive is excessively increased based on 100 parts by weight of the liquid crystal, a problem may occur in that the state of the liquid crystal (mesophase state) may be changed to an isotropic liquid phase.

Meanwhile, the liquid crystal capsule of the embodiment may comprise a polymer shell formed on the surface of the core. The shell may be a single-layer shell made of a single polymer material, or may be a double-layer shell or multi-layer shells having three or more layers made of different polymer materials for further improved mechanical properties and particle uniformity. Accordingly, the uniformity of liquid crystal particles may be improved, and a contamination problem caused by a dye may be improved at the same time.

A material forming the shell has the same refractive index as a matrix polymer in which a liquid crystal composite is dispersed, and specific examples thereof are not particularly limited, but, for example, may be selected from polyvinyl alcohol, polyurea, polyacrylic, polyurethane, polyamide including nylon, polyacetal, and polyester.

However, taking a specific example, the polymer shell formed on the surface of the core may be made of a glyoxal-crosslinked polyvinyl alcohol (PVA) resin. As for the type of PVA, there is no particular limitation, and various PVAs having different molecular weights or saponification degrees may be appropriately selected according to purposes. As a crosslinking agent for PVA, glyoxal is used.

Meanwhile, the average diameter of the liquid crystal capsule may be 100 nm to 300 nm. When the average diameter of the liquid crystal capsule is excessively reduced, there is a problem in that driving voltage increases and power consumption increases. Further, when the average diameter of the liquid crystal capsule is excessively increased, visible light is scattered, causing a problem of high haze.

The liquid crystal capsule may be a group of individual particles having an average diameter of 100 nm to 300 nm, and individual fine particles included in such a group may have a diameter of 100 nm to 300 nm on average. More specifically, 60% or 80% of individual fine particles included in the group may have a diameter of 100 nm to 300 nm.

Meanwhile, according to another embodiment of the invention, there may be provided a liquid crystal capsule comprising: a core containing liquid crystal and an emulsifier; and a polymer shell formed on a surface of the core; wherein the emulsifier comprises a sorbitan ester-based compound, and the emulsifier further comprises at least one second emulsifier selected from the group consisting of an acetylenic diol-based compound and a polysorbate-based compound.

The present inventors confirmed through experiments and completed the invention that, like the liquid crystal capsule of the one embodiment, by further comprising at least one second emulsifier selected from the group consisting of an acetylenic diol-based compound and a polysorbate-based compound along with a sorbitan ester-based compound as an emulsifier contained together with liquid crystal in a core inside the capsule, anchoring energy with a surface in contact with the liquid crystal is reduced, and as liquid crystal alignment changes to radial, vertical alignment of the liquid crystal is induced, and that thereby a high transmittance variation rate may be induced even at a lower voltage.

In particular, compared to the case where only a sorbitan ester-based compound is used as an emulsifier, by further comprising at least one second emulsifier selected from the group consisting of an acetylenic diol-based compound and a polysorbate-based compound, movement of liquid crystal molecules may be facilitated or emulsification stability of the liquid crystal may be increased. As a result, a contrast ratio increases and stable electro-optical properties may be secured during repeated driving of a liquid crystal cell.

Specifically, the liquid crystal capsule of the other embodiment may comprise a liquid crystal-containing core. The liquid crystal capsule structure according to the present invention is characterized by containing liquid crystal within an interior encapsulated by a polymer shell. Due to this, uniformity of the liquid crystal particles may be improved.

The liquid crystal is not particularly limited, and examples thereof may include nematic liquid crystal, smectic liquid crystal, cholesteric liquid crystal, and chiral nematic liquid crystal. Specific types of liquid crystal compounds are not limited, and various conventionally known liquid crystals may be used without limitation. The liquid crystal compound is not particularly limited, but may be composed of a fluorine-based or cyano-based compound, or a mixture thereof.

Meanwhile, the core may further comprise an emulsifier. The emulsifier is a surfactant used for forming liquid crystal droplets. By increasing the surface energy that the liquid crystal contacts, and as the liquid crystal alignment changes to radial, it induces vertical alignment of the liquid crystal, and may thereby induce a high transmittance variation rate even at a lower voltage.

The emulsifier may comprise a sorbitan ester-based compound. The sorbitan ester-based compound may comprise the sorbitan ester, a derivative compound thereof, or a mixture of two or more types thereof.

The sorbitan ester-based compound may comprise an intramolecular carbon-carbon double bond. When the intramolecular carbon-carbon double bond (C=C) of the sorbitan ester-based compound is contained, interactions between the double bonds in the emulsifier molecules aligned toward a central axis in the liquid crystal and the liquid crystal molecules are strengthened, so that the liquid crystal may exhibit radial alignment. As a result, high transmittance variation may be implemented even at a lower voltage.

The sorbitan ester-based compound is a reaction product of sorbitan and a carboxylic acid containing an intramolecular carbon-carbon double bond, and the carboxylic acid containing an intramolecular carbon-carbon double bond may have 10 to 30, 15 to 30, 16 to 30, 17 to 30, 15 to 20, 16 to 20, 17 to 20, or 17 to 19 carbon atoms. A specific example of the carboxylic acid containing an intramolecular carbon-carbon double bond may be oleic acid.

The sorbitan ester-based compound may have a molar mass of 1220 g/mol or less, or 800 g/mol or less, or 100 g/mol or more, or 100 g/mol to 1220 g/mol, or 100 g/mol to 800 g/mol, or 400 g/mol to 700 g/mol, or 400 g/mol to 500 g/mol, or 600 g/mol to 700 g/mol.

On the other hand, if the molar mass of the sorbitan ester-based compound excessively increases above 1220 g/mol, when a capsule is prepared using liquid crystal, problems such as a decrease in oil-in-water emulsion stability and an increase in haze of an optical film may occur.

More specifically, the sorbitan ester-based compound may have a molar mass of 800 g/mol or less, or 100 g/mol to 800 g/mol, or 400 g/mol to 700 g/mol, or 400 g/mol to 500 g/mol. A specific example of the sorbitan ester-based compound having the above-mentioned molar mass may be sorbitan monooleate.

The sorbitan ester-based compound having the molar mass of 800 g/mol or less, or 100 g/mol to 800 g/mol, or 400 g/mol to 700 g/mol, or 400 g/mol to 500 g/mol, has an HLB (Hydrophile Lipophile Balance) value of 4 to 4.5. The HLB may be calculated by the following mathematical formula 1. $HLB = 20 * \left(MH/M\right)$

In Mathematical Formula 1, MH is the molecular weight (or molar mass) of a hydrophilic group, and M is the molecular weight (or molar mass) of an emulsifier.

Further, the sorbitan ester-based compound may have a molar mass of 800 g/mol or less, or 100 g/mol to 800 g/mol, or 400 g/mol to 700 g/mol, or 600 g/mol to 700 g/mol. A specific example of the sorbitan ester-based compound having the above-mentioned molar mass may be sorbitan dioleate.

Meanwhile, the sorbitan ester-based compound may be a mixture of two or more types of sorbitan ester-based compounds having different molar masses. More specifically, the sorbitan ester-based compound may be a mixture of a sorbitan ester-based compound having a molar mass of 400 g/mol to 500 g/mol and a sorbitan ester-based compound having a molar mass of 600 g/mol to 700 g/mol.

A molar ratio for mixing the sorbitan ester-based compound having the molar mass of 400 g/mol to 500 g/mol and the sorbitan ester-based compound having the molar mass of 600 g/mol to 700 g/mol is not particularly limited, and the sorbitan ester-based compound having the molar mass of 400 g/mol to 500 g/mol may be mixed with the sorbitan ester-based compound having the molar mass of 600 g/mol to 700 g/mol in a molar ratio of 10:1 to 1:10, or 5:1 to 1:5, or 3:1 to 1:3.

Describing with a more specific example, the mixture of two or more types of sorbitan ester-based compounds having different molar masses may be sorbitan sesquioleate (a 1:1 molar ratio mixture of sorbitan monooleate (molar mass: 428.61 g/mol) : sorbitan dioleate (molar mass: 693 g/mol)).

The aforementioned sorbitan ester-based compound, which is a mixture of a sorbitan ester-based compound having a molar mass of 400 g/mol to 500 g/mol and a sorbitan ester-based compound having a molar mass of 600 g/mol to 700 g/mol, has an HLB (Hydrophile Lipophile Balance) value of 3.5 to 3.9.

Meanwhile, the emulsifier may further comprise at least one second emulsifier selected from the group consisting of an acetylenic diol-based compound and a polysorbate-based compound. That is, the emulsifier may further comprise a second emulsifier containing one type of an acetylenic diol-based compound, one type of a polysorbate-based compound, or a mixture thereof. In this case, the sorbitan ester-based compound may be a first emulsifier. The second emulsifier may relatively reduce van der Waals interaction with liquid crystal and, by sufficiently lowering surface anchoring energy of the liquid crystal in the capsule, may induce a high transmittance variation rate even at a lower voltage.

Specifically, based on 100 parts by weight of the sorbitan ester-based compound (first emulsifier), a weight of the second emulsifier may be 1 part by weight to 1000 parts by weight, or 10 parts by weight to 500 parts by weight, or 10 parts by weight to 100 parts by weight. Within a range satisfying the numerical range, by sufficiently lowering the surface anchoring energy of the liquid crystal in the capsule, a high transmittance variation rate may be induced even at a lower voltage.

On the other hand, if the weight of the second emulsifier is excessively reduced based on 100 parts by weight of the sorbitan ester-based compound (first emulsifier), movement of liquid crystal molecules is not easy, and thus a contrast ratio may decrease or stable electro-optical properties may not be secured during repeated driving of a liquid crystal cell. Further, if the weight of the second emulsifier is excessively increased based on 100 parts by weight of the sorbitan ester-based compound (first emulsifier), a problem may occur in that surface anchoring energy of the liquid crystal in the capsule is not sufficiently lowered and thus driving voltage increases.

More specifically, the second emulsifier may comprise an acetylenic diol-based compound. The acetylenic diol-based compound may comprise an acetylenic diol compound or a derivative thereof. As a specific example, the acetylenic diol-based compound may be 2,4,7,9-tetramethyl-5-decyn-4,7-diol (2,4,7,9-tetramethyl-5-decyn-4,7-diol). Since the acetylenic diol-based compound does not have an ethylene oxide repeating unit in an emulsifier structure, it may relatively reduce van der Waals interaction with fluorine-based liquid crystal compared to an emulsifier having an ethylene oxide repeating unit.

The acetylenic diol-based compound may have an HLB (Hydrophile Lipophile Balance) value of 2 to 5, or 3 to 4. Generally, in order to make a stable oil-in-water emulsion using a conventional emulsifier, it is necessary for the emulsifier to be adsorbed to an aqueous phase/oil phase interface to form a liquid crystal, and for this purpose, the HLB (Hydrophile Lipophile Balance) value of the emulsifier to be used must be carefully adjusted according to the polarity of the oil phase.

The polysorbate-based compound may include all polysorbate compounds or derivative compounds thereof. The polysorbate refers to a sorbitan ester containing a polyoxyalkylene repeating unit structure in a molecule. The polysorbate-based compound may be at least one compound selected from the group consisting of polysorbate 20, polysorbate 40, polysorbate 60, and polysorbate 80. That is, the polysorbate-based compound may be one type of polysorbate 20, one type of polysorbate 40, one type of polysorbate 60, one type of polysorbate 80, or a mixture thereof.

The polysorbate-based compound may have a molar mass of at least 1225 g/mol, at least 1300 g/mol, at most 1500 g/mol, from 1225 g/mol to 1500 g/mol, or from 1300 g/mol to 1500 g/mol.

More specifically, the polysorbate-based compound may be polysorbate 20 having a molar mass of 1225 g/mol to 1300 g/mol, or 1225 g/mol to 1250 g/mol.

Further, the polysorbate-based compound may be Polysorbate 80 having a molar mass of 1300 g/mol to 1500 g/mol, or 1305 g/mol to 1350 g/mol.

Meanwhile, based on 100 parts by weight of the liquid crystal, an emulsifier content may be 0.1 parts by weight to 50 parts by weight, or 0.1 parts by weight to 20 parts by weight, or 0.5 parts by weight to 20 parts by weight, or 1 part by weight to 20 parts by weight, or 5 parts by weight to 11 parts by weight. When the content of the emulsifier is excessively reduced based on 100 parts by weight of the liquid crystal, there is a limitation in that it is difficult to sufficiently induce a high transmittance variation rate even at a lower voltage by inducing vertical alignment of the liquid crystal by the emulsifier. Further, when the content of the emulsifier is excessively increased based on 100 parts by weight of the liquid crystal, a problem may occur in that excessive emulsifiers form colloidal micelles, causing surface tension of a solution to drop sharply.

Meanwhile, the core may further comprise an anisotropic dye. The anisotropic dye is not particularly limited as long as it is a dopable anisotropic dye, and specifically, it may be S-428, M-483, M412 (Mitsui Fine Chemical), etc.

Meanwhile, the core may further comprise a siloxane-based additive. The siloxane-based additive is an additive capable of lowering interfacial tension of the liquid crystal. Accordingly, the liquid crystal capsule in which the siloxane-based additive and the liquid crystal are contained together in the core may sufficiently lower surface anchoring energy of the liquid crystal in the capsule.

The siloxane-based additive may have a molar mass of 500 g/mol or less, or 100 g/mol to 500 g/mol. The siloxane-based additive may comprise a trisiloxane-based compound. The trisiloxane-based compound may comprise a trisiloxane compound or a derivative thereof. As a specific example, the siloxane-based additive may be octamethyltrisiloxane or hexamethylcyclotrisiloxane.

In particular, based on 100 parts by weight of the liquid crystal, a siloxane-based additive content may be 0.1 parts by weight to 50 parts by weight, or 0.1 parts by weight to 20 parts by weight, or 0.5 parts by weight to 20 parts by weight, or 0.5 parts by weight to 10 parts by weight, or 0.9 parts by weight to 1 part by weight. When the content of the siloxane-based additive is excessively reduced based on 100 parts by weight of the liquid crystal, the surface tension lowering effect of the liquid crystal by the siloxane-based additive is not sufficiently implemented, so there is a limitation in that surface anchoring energy of the liquid crystal in the capsule cannot be sufficiently lowered. Further, when the content of the siloxane-based additive is excessively increased based on 100 parts by weight of the liquid crystal, a problem may occur in that the state of the liquid crystal (mesophase state) may be changed to an isotropic liquid phase.

Meanwhile, the liquid crystal capsule of the one embodiment may comprise a polymer shell formed on a surface of the core. The shell may be a single-layer shell made of a single polymer material, or may be a double-layer shell or a multi-layer shell having three or more layers made of different polymer materials for improved mechanical properties and particle uniformity. Accordingly, the uniformity of liquid crystal particles may be improved, and a contamination problem caused by a dye may be alleviated at the same time.

A material forming the shell has the same refractive index as a matrix polymer in which a liquid crystal composite is dispersed, and specific examples thereof are not particularly limited, but for example, may be selected from polyvinyl alcohol, polyurea, polyacrylic, polyurethane, polyamide including nylon, polyacetal, and polyester.

However, taking a specific example, the polymer shell formed on the surface of the core may be made of a glyoxal-crosslinked polyvinyl alcohol (PVA) resin. As for the type of PVA, there is no particular limitation, and various PVAs having different molecular weights or saponification degrees may be appropriately selected according to purposes. As a crosslinking agent for cross-linking PVA, glyoxal is used.

Meanwhile, the average diameter of the liquid crystal capsule may be 100 nm to 300 nm. When the average diameter of the liquid crystal capsule is excessively reduced, there is a problem in that driving voltage increases and power consumption increases. Further, when the average diameter of the liquid crystal capsule is excessively increased, visible light is scattered, causing a problem of high haze.

The liquid crystal capsule may be a group of individual particles having an average diameter of 100 nm to 300 nm, and individual fine particles included in such a group may, on average, have a diameter of 100 nm to 300 nm. More specifically, 60% or 80% of individual fine particles included in the group may have a diameter of 100 nm to 300 nm.

The present application also provides a use of the liquid crystal capsule. The liquid crystal capsule of the present application may be used in various light modulation devices to which liquid crystals are applicable. Accordingly, the present application provides a light modulation device comprising a substrate; and a liquid crystal layer formed on one surface of the substrate and comprising the liquid crystal capsule. Manufacturing methods and types of light modulation devices are well known in the art, and may be manufactured using known manufacturing methods without limitation. The light modulation device comprises, but is not limited to, a smart window, an isotropic film, a polarization control film, or a flexible LCD.

A manufacturing method of the liquid crystal capsule is not significantly limited, and various conventionally known manufacturing methods of liquid crystal capsules may be applied without limitation. However, for example, it comprises the steps of (1) preparing a mixed solution by mixing a mixed material containing liquid crystal, an emulsifier, and polyvinyl alcohol (PVA) in a solvent, (2) forming droplets from the mixed solution, (3) disposing polyvinyl alcohol (PVA) around the droplets, and (4) cross-linking polyvinyl alcohol (PVA) using glyoxal to form a polymer shell surrounding the liquid crystal, thereby manufacturing a liquid crystal capsule enclosing the liquid crystal in the polymer shell.

In the process of (1) preparing a mixed solution by mixing a mixed material containing liquid crystal, an emulsifier, and polyvinyl alcohol (PVA) in a solvent, the solvent is not particularly limited and may be appropriately selected according to purposes, and examples thereof include water such as pure water such as ion-exchanged water, ultrafiltered water, reverse osmosis water, and distilled water, or ultrapure water. An additive may be additionally added as necessary.

In the process of (1) preparing a mixed solution by mixing a mixed material containing liquid crystal, an emulsifier, and polyvinyl alcohol (PVA) in a solvent, examples of a method of mixing the liquid crystal, the emulsifier, the polyvinyl alcohol (PVA), and the additive with the solvent are not significantly limited, and various methods used in conventionally known emulsification reactions may be applied without limitation.

In the process of (2) forming droplets from the mixed solution, the droplets are dispersed in a dispersion medium, and more specifically, the droplets are dispersed in the dispersion medium in a state in which an emulsifier covers the surroundings of the liquid crystal.

As a method of preparing the droplets, a method of producing droplets using a dispersive emulsification apparatus may be mentioned.

As the dispersive emulsification apparatus, there is no particular limitation as long as droplets of a desired particle size are obtained, and it may be appropriately selected according to the purpose. For example, a homo mixer, which is an apparatus for mixing liquids, or a homogenizer, which is an apparatus for finely dividing and homogenizing particles, may be used. Further, the dispersion method is also not particularly limited. For example, any dispersion method among stirring, ultrasonic, or high pressure may be used.

In the present invention, as a dispersive emulsification apparatus, various types of dispersive emulsification apparatuses such as, for example, a high-speed homogenizer, an ultrasonic homogenizer, a high-pressure homogenizer, and a homo mixer may be used.

Furthermore, a more preferred embodiment of the process for preparing droplets is a droplet preparation process comprising: a first preparation process for preparing droplets using a first dispersive emulsification apparatus; and a second preparation process for preparing droplets having a particle diameter smaller than the particle diameter obtained in the first preparation process, using a second dispersive emulsification apparatus.

Regarding the first and second dispersion type emulsification devices, there are no particular limitations as long as droplets of a desired particle size are obtained. For example, various dispersion type emulsification devices such as the above-described high-speed homogenizer, ultrasonic homogenizer, high-pressure homogenizer, and homomixer, may be appropriately combined and used.

In the process of (3) arranging polyvinyl alcohol (PVA) around the droplet, under a droplet dispersion liquid of a predetermined temperature, coacervation, in which PVA gathers around the liquid crystal composition, may proceed. For example, it is preferable to set the solution temperature of the droplet dispersion liquid in the coacervation process to be equal to or higher than room temperature.

In a process for manufacturing liquid crystal capsules, the liquid crystal capsules comprising liquid crystal contained within a polymer shell, wherein the polymer shell is formed by (4) cross-linking polyvinyl alcohol (PVA) using the aforementioned glyoxal to surround the liquid crystal, it is preferable that the cross-linking reaction is performed under acidic conditions. Regarding the acidic conditions, it is preferable that the pH is in the range of 1 to 5, and it is more preferable that the pH is about 3.

### 2. Capsule solution

Meanwhile, according to another embodiment of the invention, a capsule solution comprising the liquid crystal capsules of the one embodiment or another embodiment, and a solvent may be provided. The contents regarding the liquid crystal capsules include the details described above with respect to the one embodiment and another embodiment.

As for the solvent, there are no particular limitations and it may be appropriately selected according to the purpose. For example, water such as pure water including ion-exchanged water, ultrafiltered water, reverse osmosis water, and distilled water, or ultrapure water, may be mentioned.

The capsule solution comprises liquid crystal capsules dispersed in a solvent. That is, the capsule solution may be a liquid crystal capsule dispersion. The capsule solution may also be used as a coating liquid for forming a liquid crystal layer. For example, the liquid crystal layer is formed by coating the capsule solution on a support substrate to form a film.

### 3. Optical Film

Meanwhile, according to another embodiment of the invention, an optical film may be provided, the optical film comprising a binder resin and liquid crystal domains dispersed in the binder resin, wherein a haze upon voltage application is 10% or less, and a threshold voltage, which is a voltage at which the transmittance reaches 10% of the maximum transmittance measured upon voltage application, is 60 V or less.

Specifically, the optical film may comprise a binder resin. The binder resin may function as a binder that fixes liquid crystal domains while dispersing the liquid crystal domains within the optical film.

The content regarding the binder resin is not particularly limited, and for example, various transparent materials widely used in the optical film field may be used without limitation as the binder resin. Specific examples of the binder resin are not particularly limited, and for example, the binder resin may be selected from the group consisting of polyvinyl alcohol, polyurea, polyurethane, polyamide comprising nylon, polyacetal, and polyester.

Meanwhile, the optical film may include liquid crystal domains dispersed in the binder resin. The liquid crystal domain refers to a region containing liquid crystal within the optical film. As the optical film forms domains in which liquid crystal is confined within a certain region, the liquid crystal domains may be more stably dispersed in the binder resin and may have durability during a film formation process. This is because the liquid crystal domains originate from liquid crystal capsules comprising a core containing liquid crystal and a polymer shell formed on the surface of the core.

Two or more liquid crystal domains may be included, and the two or more liquid crystal domains may each have independent regions. Two or more liquid crystal domains may be dispersed within the optical film, and these two or more liquid crystal domains may each have independent regions without overlapping. Accordingly, the liquid crystal domains may be more stably dispersed in the binder resin and may have durability during the film-forming process.

The liquid crystal domain may comprise liquid crystal and an emulsifier. The content regarding the liquid crystal and emulsifier may include all of the content described in detail in the aforementioned one embodiment.

Specifically, the liquid crystal domain comprises liquid crystal and an emulsifier, wherein the emulsifier comprises a sorbitan ester-based compound, wherein the sorbitan ester-based compound has a molar mass of 1220 g/mol or less, and wherein the sorbitan ester-based compound may comprise intramolecular carbon-carbon double bonds. That is, the optical film of another embodiment may be derived from a liquid crystal capsule comprising a core containing liquid crystal and an emulsifier; and a polymer shell formed on a surface of the core; wherein the emulsifier comprises a sorbitan ester-based compound, wherein the sorbitan ester-based compound has a molar mass of 1220 g/mol or less, and wherein the sorbitan ester-based compound comprises intramolecular carbon-carbon double bonds.

Furthermore, the liquid crystal domain comprises a liquid crystal and an emulsifier, wherein the emulsifier comprises a sorbitan ester-based compound, and the emulsifier may further comprise one or more second emulsifiers selected from the group consisting of an acetylenic diol-based compound and a polysorbate-based compound. That is, the optical film of another embodiment comprises a core containing a liquid crystal and an emulsifier; and a polymer shell formed on a surface of the core; and may be derived from a liquid crystal capsule wherein the emulsifier comprises a sorbitan ester-based compound and further comprises one or more second emulsifiers selected from the group consisting of an acetylenic diol-based compound and a polysorbate-based compound.

Further, the liquid crystal domain may further comprise an anisotropic dye. Details regarding the anisotropic dye may include all of the contents described above in the one embodiment.

Further, the liquid crystal domain may further comprise a siloxane-based additive. The details regarding the siloxane-based additive may include all content described in detail in the one embodiment.

The average diameter of the liquid crystal domain may be 100 nm to 300 nm. That is, the liquid crystal domain may be a liquid crystal nano domain. If the average diameter of the liquid crystal domain excessively decreases, there is a problem that the driving voltage increases, leading to increased power consumption. Furthermore, if the average diameter of the liquid crystal domain excessively increases, there is a problem that visible light is scattered, leading to increased Haze.

The liquid crystal domain may be a group of individual particles having an average diameter of 100 nm to 300 nm, and individual fine particles included in such a group may, on average, have a diameter of 100 nm to 300 nm. More specifically, 95% or 99% of the individual fine particles included in the group may have a diameter of 100 nm to 300 nm.

The liquid crystal domain may be derived from the liquid crystal capsule of the one embodiment or the liquid crystal capsule solution of another embodiment.

More specifically, for example, the optical film may be formed by coating the capsule solution of the other embodiment onto a support substrate to form a film.

In addition, the optical film may have a haze upon application of voltage of 10% or less, or 9% or less, or 8% or less, or 7.5% or less, or 5% or less, or 2.5% or less, or 3% or less, or 2.6% or less, or 2% or less, or 1.5% or less, or 1.2% or less, or 1.0% or less, or 0.1% or more, or 2.1% or more, or 2.6% or more, or 7% or more, or 7.6% or more, or a combination of these numerical ranges.

The haze of the optical film upon application of the voltage refers to a haze value measured when a voltage is applied to the optical film. More specifically, the examples of the applied voltage are not largely limited, and a voltage of 1V to 100V may be applied.

For a more specific example, the Hazeₒₙ, which is haze at an applied voltage of 100V, may be 10% or less, or 9% or less, or 8% or less, or 7.5% or less, or 5% or less, or 2.5% or less, or 3% or less, or 2.6% or less, or 2% or less, or 1.5% or less, or 1.2% or less, or 1.0% or less, or 0.1% or more, or 2.1% or more, or 2.6% or more, or 7% or more, or 7.6% or more, or a combination of these numerical ranges.

In addition, the optical film may have Haze_{off}, which is the haze at an applied voltage of 0V, of 35% or less, or 30% or less, or 26% or less, or 25% or less, or 20% or less, or 16% or less, or 11% or more, or 20% or more, or 25% or more, or a combination of these numerical ranges.

The optical film, by having the haze in the above-mentioned range, may exhibit more transparent optical characteristics when voltage is applied and when voltage is not applied. The method for measuring the haze is not limited, and various methods widely known in the field of conventional liquid crystal-containing optical devices may be applied without limitation. However, for example, it may be measured through a haze meter (Nippon Denshoku Co., NDH7000) while applying a voltage through a function generator.

The optical film may have a threshold voltage, which is a voltage at which the transmittance reaches 10% of the maximum transmittance measured upon voltage application, of 60 V or less, or 55 V or less, or 45 V or less, or 40 V or less, or 35 V or less, or 25 V or less, or 20 V or less, or 1 V or more, or 1 V to 60 V, or 1 V to 55 V, or 1 V to 45 V, or 1 V to 40 V, or 1 V to 35 V, or 1 V to 25 V, or 1 V to 20 V. The threshold voltage means the voltage at 10% transmittance of the maximum transmittance, and because the optical film has a threshold voltage within the above-described range, it may be operable even at a lower voltage. The method for measuring the threshold voltage is not limited, and various methods widely known in the field of conventional liquid crystal-containing optical devices may be applied without limitation. However, as an example, it may be measured using a haze meter (Nippon Denshoku, NDH7000) while applying a voltage through a function generator.

Specific details regarding the optical film may be applied without limitation, drawing from various conventionally known optical films. For example, all details regarding the structure, composition, manufacturing method, physical properties, usage, and the like of the optical film may be applied without limitation, drawing from various contents widely known in the conventional film field.

However, for example, the optical film may be used for a transmittance variable film.

### 4. Optical device

Meanwhile, according to another embodiment of the invention, an optical device comprising the optical film of the aforementioned other embodiment may be provided. Details regarding the optical film include the details described above concerning the aforementioned other embodiment.

Regarding the content of the aforementioned optical device, various conventionally known optical devices may be applied without limitation. For example, the content regarding the specific structure, size, manufacturing method, physical properties, and use, etc., of the optical device may all apply various contents widely known in the conventional display field without limitation.

However, for example, the optical device may be a light modulation device comprising an optical film of the other embodiment. While specific examples of the light modulation device are not particularly limited, they may include, for example, a smart window, an isotropic film, a polarization control film, or a liquid crystal display device, an organic electroluminescent display device, and the like.

More specifically, examples of the optical device may include a liquid crystal display element comprising: a set of substrates arranged to face each other; electrodes formed on one or both of the opposing surfaces of each of the set of substrates; a liquid crystal layer formed by applying the liquid crystal capsule solution of the present invention, said liquid crystal layer being disposed between the substrates; and electric field applying means for applying an electric field to the liquid crystal capsules of the present invention in the liquid crystal layer via the electrodes.

Further, the optical device may have a threshold voltage of 60 V or less, or 55 V or less, or 45 V or less, or 40 V or less, or 35 V or less, or 25 V or less, or 20 V or less, or 1 V or more, or 1 V to 60 V, or 1 V to 55 V, or 1 V to 45 V, or 1 V to 40 V, or 1 V to 35 V, or 1 V to 25 V, or 1 V to 20 V. The threshold voltage refers to a voltage at 10% transmittance of maximum transmittance, and as the optical device has the threshold voltage in the above-mentioned range, the optical device may be driven even at a lower voltage. A method of measuring the threshold voltage is not limited, and various methods widely known in the field of conventional liquid crystal-containing optical devices may be applied without limitation. However, for example, it may be measured through a haze meter (NDH7000, Nippon Denshoku Co.) while applying a voltage through a function generator.

Further, the optical device may have a contrast of 10 or more, or 15 or more, or 17 or more, or 18 or more, or 20 or more, or 30 or more, or 33 or more, or 40 or less, or 10 to 40, or 15 to 40, or 17 to 40, or 18 to 40, or 20 to 40, or 30 to 40, or 33 to 40. The contrast refers to a ratio between transmittance at a voltage of 100 V and transmittance at a voltage of 0 V, whereby, as the optical device has a contrast within the aforementioned range, the optical device may achieve excellent transmittance variability even at lower voltages. The method for measuring the contrast is not limited, and various methods well-known in the conventional field of liquid crystal-containing optical devices may be applied without limitation. However, for example, it may be measured using a haze meter (Nippon Denshoku, NDH7000) while applying voltage through a function generator.

Furthermore, the optical device may have Hazeₒₙ, which is the haze at an applied voltage of 100V, of 10% or less, or 9% or less, or 8% or less, or 7.5% or less, or 5% or less, or 2.5% or less, or 3% or less, or 2.6% or less, or 2% or less, or 1.5% or less, or 1.2% or less, or 1.0% or less, or 0.1% or more, or 2.1% or more, or 2.6% or more, or 7% or more, or 7.6% or more, or a combination of these numerical ranges. Furthermore, the optical device may have Haze_{off}, which is the haze at an applied voltage of 0V, of 35% or less, or 30% or less, or 26% or less, or 25% or less, or 20% or less, or 16% or less, or 11% or more, or 20% or more, or 25% or more, or a combination of these numerical ranges.

In accordance with having haze within the aforementioned range, the optical device may realize more transparent optical characteristics both when voltage is applied and when voltage is not applied. The method for measuring the haze is not limited, and various methods well-known in the conventional liquid crystal-containing optical device field may be applied without limitation. However, for example, it may be measured using a haze meter (Nippon Denshoku Co., Ltd., NDH7000) while applying voltage through a function generator.

### 5. Transmittance Variable Device

Meanwhile, according to another embodiment of the invention, a transmittance variable device comprising the optical film of the aforementioned other embodiment may be provided. The details regarding the optical film include the contents described above concerning the aforementioned other embodiment.

Regarding the transmittance variable device, various conventionally known transmittance variable devices may be applied without limitation. For example, details regarding the specific structure, size, manufacturing method, physical properties, use, and the like of the transmittance variable device may all be applied without limitation, using various contents widely known in the conventional liquid crystal capsule field. However, by way of example, the transmittance variable device may include a transparent electrode layer and a transmittance variable layer, and the transmittance variable layer may include the optical film of the one embodiment. More specifically, the transmittance variable layer may be positioned between two transparent electrode layers, and a voltage may be applied to the transmittance variable layer using voltage application means. Details regarding the voltage application means are not particularly limited, and any conventionally known technology may be applied without limitation.

The transmittance variable device of the present application may be applied to all devices to which transmittance variation may be applied. For example, the transmittance variable device of the present application may be applied to a sunroof, automobile glass, goggles, sunglasses, or a helmet and may provide a transmittance variable device. As long as the transmittance variable device includes the transmittance variable device of the present application, other parts or structures, etc. are not particularly limited, and all details known in this field may be appropriately applied.

### [Effects of the Invention]

According to the present invention, a liquid crystal capsule capable of inducing a high transmittance variation rate even at a lower voltage, and a capsule solution, an optical film, an optical device, and a transmittance variable device using the same may be provided.

### [Mode for Carrying Out the Invention]

The invention will be described in more detail in the following Examples. However, the following Examples are merely illustrative of the present invention, and the scope of the present invention is not limited by the following Examples.

### <Example and Comparative Example: Preparation of Liquid Crystal Capsule and Capsule Solution>

Polyvinyl alcohol (polyvinyl alcohol, PVA), water, an emulsifier, liquid crystal containing an anisotropic dye, and an additive were mixed and stirred according to the compositions shown in Table 1 below. Thereafter, emulsification was performed at 18,000 rpm using an IKA homogenizer T25. Thereafter, second emulsification was performed at 10,000 psi using a Microfluidizer to form droplets.

Thereafter, the solution was heated to 40 °C under stirring, and PVA was adsorbed onto surfaces of the droplets for 18 hours.

Thereafter, using a 40% glyoxal aqueous solution as a crosslinking agent, the adsorbed PVA was cross-linked under a pH 3 condition at 40 °C for 18 hours.

A supernatant recovered by centrifugation at 5000 rpm for 30 minutes was concentrated with a rotary evaporator to obtain a capsule solution containing liquid crystal capsules.

**[Table 1]**

| Compositions of Examples and Comparative Examples | | | | | |
|---|---|---|---|---|---|
| Classification | PVA | Water | Liquid Crystal | Emulsifier (Type / Input Amount) | Additive |
| Example 1 | 1.3g | 89g | 9.2g | E1 0.5g | - |
| Example 2 | 1.3g | 89g | 9.2g | E2 0.5g | - |
| Example 3 | 1.3g | 89g | 9.2g | E1 0.25g | - |
| | | | | E3 0.25g | |
| Example 4 | 1.3g | 93.6g | 4.6g | E1 0.225g | - |
| | | | | E4 0.025g | |
| Example 5 | 1.3g | 93.6g | 4.6g | E2 0.25g | - |
| | | | | E3 0.25g | |
| Example 6 | 1.3g | 89g | 9.2g | E1 0.5g | A1 0.09g |
| | | | | E3 0.5g | |
| Comparative Example 1 | 1.3g | 93.6g | 4.6g | E5 0.25g | - |
| Comparative Example 2 | 1.3g | 93.6g | 4.6g | E6 0.25g | - |
| Comparative Example 3 | 1.3g | 93.6g | 4.6g | E4 0.25g | - |
| Comparative Example 4 | 1.3g | 93.6g | 4.6g | E7 0.75g | - |

| | | | | | |
|---|---|---|---|---|---|
| E1: sorbitan monooleate (molar mass: 428.61 g/mol, HLB: 4.3) E2: sorbitan sesquioleate (a 1:1 molar ratio mixture of sorbitan monooleate (molar mass: 428.61 g/mol) and sorbitan dioleate (molar mass: 693 g/mol), HLB: 3.7) E3 : 2,4,7,9-tetramethyl-5-decyn-4,7-diol (2,4,7,9-tetramethyl-5-decyn-4,7-diol, HLB : 3) E4: polysorbate 20 (molar mass: 1226 g/mol) E5: sorbitan monostearate E6: sorbitan tristearate E7: Polysorbate 80 (molar mass: 1309.65 g/mol) A1: octamethyltrisiloxane | | | | | |

### <Experimental Example>

Physical properties were measured for the liquid crystal capsules or capsule solutions obtained in the Examples and Comparative Examples by the following methods, and the results are shown in Table 2.

### 1. Physical properties of liquid crystal capsule film

### (1) Thickness (µm)

A liquid crystal capsule film was prepared by coating a capsule solution on the ITO of a PET-ITO film with a film applicator and then drying at 70 °C for 2 hours. The thickness of the liquid crystal capsule film was measured using an Alpha step (KLA TENCOR Co.).

### (2) T_{off} (%), Haze_{off} (%), Hazeₒₙ (%), threshold voltage (V), CR

After laminating an ITO side of a PET-ITO film on top of the liquid crystal capsule film using a laminator (EXCELAM-SMART 655, GMP Co.), an electrode tape was attached to the ITO side.

T_{off}, which is transmittance of the liquid crystal capsule film when no voltage is applied (transmittance at an applied voltage of 0 V), and Haze_{off}, which is haze of the liquid crystal capsule film when no voltage is applied (haze at an applied voltage of 0 V), were measured using a haze meter (Nippon Denshoku Co., NDH7000).

Then, while applying a voltage through a function generator, a threshold voltage, which is a voltage at a transmittance of 10% of the maximum transmittance, Hazeₒₙ, which is haze at an applied voltage of 100 V, and contrast (CR), which is a ratio between transmittance at a voltage of 100 V and transmittance at a voltage of 0 V, were measured through a haze meter (NDH7000, Nippon Denshoku Co.).

**[Table 2]**

| Measurement results of the experimental examples in Examples and Comparative Examples. | | | | | | |
|---|---|---|---|---|---|---|
| Classification | Thickness (µm) | T_{off}(%) | Haze_{off}(%) | Hazeₒₙ(%) | Threshold voltage (V) | CR @100V |
| Example 1 | 14.7 | 1.2 | 17.1 | 1.0 | 20 | 23.4 |
| Example 2 | 11.8 | 1.2 | 26.3 | 1.4 | 25 | 18.8 |
| Example 3 | 13.2 | 0.9 | 21.1 | 2.5 | 40 | 33.2 |
| Example 4 | 13.4 | 1.7 | 30.8 | 7.5 | 55 | 17.3 |
| Example 5 | 11.7 | 2.2 | 25.7 | 7.8 | 35 | 15.2 |
| Example 6 | 12.8 | 0.9 | 15.5 | 2.7 | 45 | 30.6 |
| Comparative Example 1 | 11.0 | 5.2 | 62.6 | 52.5 | 45 | 4.1 |
| Comparative Example 2 | 13.8 | 2.8 | 63.4 | 53.8 | 55 | 4.1 |
| Comparative Example 3 | 14.2 | 1.0 | 39.8 | 20.1 | 45 | 16.1 |
| Comparative Example 4 | Measurement not possible due to film formation impossibility | | | | | |

As shown in Table 1 above, the liquid crystal capsules of Examples simultaneously satisfied 1) a threshold voltage of 60 V or less, 2) a CR of 10 or more, and 3) Hazeₒₙ of 10% or less. Accordingly, it was confirmed that an excellent transmittance variation rate and optical properties may be implemented while driving was possible at a lower voltage.

On the other hand, the liquid crystal capsules obtained in Comparative Examples 1 and 2 had a CR of less than 10, confirming that a transmittance variation rate was poor compared to Examples. Further, the liquid crystal capsule obtained in Comparative Example 3 had Hazeₒₙ exceeding 10%, confirming that optical properties were poor compared to Examples. Meanwhile, for the liquid crystal capsule obtained in Comparative Example 4, film preparation was impossible, confirming that its physical properties could not be measured.

## Claims

1. A liquid crystal capsule comprising:
a core containing liquid crystal and an emulsifier; and
a polymer shell formed on a surface of the core;
wherein the emulsifier comprises a sorbitan ester-based compound,
the sorbitan ester-based compound has a molar mass of 1220 g/mol or less, and the sorbitan ester-based compound comprises an intramolecular carbon-carbon double bond.

2. The liquid crystal capsule according to claim 1,
wherein the sorbitan ester-based compound is a reaction product of sorbitan and a carboxylic acid containing an intramolecular carbon-carbon double bond, and the carboxylic acid containing an intramolecular carbon-carbon double bond has 10 to 30 carbon atoms.

3. The liquid crystal capsule according to claim 1,
wherein the sorbitan ester-based compound has a molar mass of 800 g/mol or less.

4. The liquid crystal capsule according to claim 3,
wherein the sorbitan ester-based compound is sorbitan monooleate.

5. The liquid crystal capsule according to claim 1,
wherein the sorbitan ester-based compound is a mixture of two or more sorbitan ester-based compounds having different molar masses.

6. The liquid crystal capsule according to claim 5,
wherein the mixture of two or more sorbitan ester-based compounds having different molar masses is sorbitan sesquioleate.

7. A liquid crystal capsule comprising:
a core containing liquid crystal and an emulsifier; and
a polymer shell formed on a surface of the core;
wherein the emulsifier comprises a sorbitan ester-based compound, and the emulsifier further comprises at least one second emulsifier selected from the group consisting of an acetylenic diol-based compound and a polysorbate-based compound.

8. The liquid crystal capsule according to claim 7,
wherein based on 100 parts by weight of the sorbitan ester-based compound, a weight of the second emulsifier is from 1 part by weight to 1000 parts by weight.

9. The liquid crystal capsule according to claim 7,
wherein the acetylenic diol-based compound has an Hydrophile Lipophile Balance value of 2 to 5.

10. The liquid crystal capsule according to claim 7,
wherein the polysorbate-based compound has a molar mass of 1225 g/mol or more.

11. The liquid crystal capsule according to claim 7,
wherein the sorbitan ester-based compound has a molar mass of 1220 g/mol or less, and the sorbitan ester-based compound comprises an intramolecular carbon-carbon double bond.

12. The liquid crystal capsule according to any one of claims 1 or 7,
wherein the core further comprises a siloxane-based additive.

13. A capsule solution comprising the liquid crystal capsule according to any one of claims 1 or 7, and a solvent.

14. An optical film comprising a binder resin and liquid crystal domains dispersed in the binder resin,
wherein a haze upon voltage application is 10% or less, and a threshold voltage, which is a voltage at which the transmittance reaches 10% of the maximum transmittance measured upon voltage application, is 60 V or less.

15. The optical film according to claim 14,
wherein the liquid crystal domain comprises liquid crystal and an emulsifier, the emulsifier comprises a sorbitan ester-based compound, the sorbitan ester-based compound has a molar mass of 1220 g/mol or less, and the sorbitan ester-based compound comprises an intramolecular carbon-carbon double bond.

16. The optical film according to claim 14,
wherein the liquid crystal domain comprises liquid crystal and an emulsifier, the emulsifier comprises a sorbitan ester-based compound, and the emulsifier further comprises at least one second emulsifier selected from the group consisting of an acetylenic diol-based compound and a polysorbate-based compound.

17. An optical device comprising the optical film according to claim 14.

18. A transmittance variable device comprising the optical film according to claim 14.
